# EUROPEAN PATENT SPECIFICATION

(11) **EP 3 943 393 B1**
(45) Date of publication and mention of the grant of the patent: **01.01.2025**
(21) Application number: 21187267.6
(22) Date of filing: 22.07.2021
(51) Int. Cl.: B64D 11/06, B60N 2/015, F16B 35/00, F16B 35/04

(54) **AIRCRAFT MONUMENT FLOOR ATTACHMENT STUD**
FLUGZEUGMODULBODENBEFESTIGUNGSBOLZEN
GOUJON DE FIXATION AU SOL DE MONUMENT POUR AÉRONEF

(30) Priority: 23.07.2020 US 202016937501
(43) Date of publication of application: 26.01.2022
(73) Proprietor: B/E Aerospace, Inc., Winston-Salem, NC 27105 (US)
(72) Inventor: HEAD, Alexander, Milton Keynes (GB); STAVROU, Demetri, London (GB); EVANS, Samuel P., Aylesbury (GB)
(74) Representative: Dehns

(56) References cited:
- EP-A1- 1 243 710
- EP-A1- 3 064 786
- DE-U1- 20 206 589
- GB-A- 2 540 481
- US-A1- 2006 104 742
- US-A1- 2013 259 562

## Description

### BACKGROUND

An aircraft cabin may include one or more aircraft monuments. An aircraft monument may include floor attachment components requiring the use of hand tools during installation of the aircraft monument within the aircraft cabin. EP 3 064 786 A1 discloses a fastener assembly. GB 2 540 481 teaches a connector for an aircraft seat. US 2013/259562 teaches an aircraft monument with integrated fastener.

### SUMMARY

An aircraft cabin is provided as defined by claim 1.

In some embodiments, the first threaded section and the second threaded section may be separated by at least one non-threaded section.

In some embodiments, a transition point between the head and the body may be of a non-uniform height with respect to the second end of the body.

In some embodiments, the at least one threaded section may include a single threaded section along the length of the body. The single threaded section may be configured to couple to the fitting and to the threaded nut.

In some embodiments, the at least one shaped portion with the at least one sloped wall may include a first shaped portion with a first sloped surface proximate to the tool section and a second shaped portion with a second sloped surface proximate to the body.

In some embodiments, the at least one intermediate diameter may be at a transition point between the first sloped surface and the second sloped surface.

In some embodiments, the first sloped surface may be set at a first angle relative to a central axis through a length of the body that is shallower than a second angle relative to the central axis through the length of the body at which the second sloped surface is set.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a perspective view of an aircraft cabin including an aircraft monument floor attachment stud, in accordance with one or more embodiments of the disclosure;
FIG. 1B illustrates a perspective view of an aircraft cabin including an aircraft monument floor attachment stud, in accordance with one or more embodiments of the disclosure;
FIG. 1C illustrates a perspective view of an aircraft cabin including an aircraft monument floor attachment stud, in accordance with one or more embodiments of the disclosure;
FIG. 1D illustrates a perspective view of an aircraft cabin including an aircraft monument floor attachment stud, in accordance with one or more embodiments of the disclosure;
FIG. 1E illustrates a perspective view of an aircraft cabin including an aircraft monument floor attachment stud, in accordance with one or more embodiments of the disclosure;
FIG. 2A illustrates a perspective view of an aircraft monument floor attachment stud, in accordance with one or more embodiments of the disclosure;
FIG. 2B illustrates a top view of an aircraft monument floor attachment stud, in accordance with one or more embodiments of the disclosure;
FIG. 2C illustrates a bottom view of an aircraft monument floor attachment stud, in accordance with one or more embodiments of the disclosure;
FIG. 2D illustrates a left view of an aircraft monument floor attachment stud, in accordance with one or more embodiments of the disclosure;
FIG. 2E illustrates a front view of an aircraft monument floor attachment stud, in accordance with one or more embodiments of the disclosure;
FIG. 2F illustrates a right view of an aircraft monument floor attachment stud, in accordance with one or more embodiments of the disclosure;
FIG. 2G illustrates a rear view of an aircraft monument floor attachment stud, in accordance with one or more embodiments of the disclosure;
FIG. 2H illustrates a cross-section view of an aircraft monument floor attachment stud, in accordance with one or more embodiments of the disclosure;
FIG. 3A illustrates a perspective view of an aircraft monument floor attachment stud, in accordance with one or more embodiments of the disclosure;
FIG. 3B illustrates a top view of an aircraft monument floor attachment stud, in accordance with one or more embodiments of the disclosure;
FIG. 3C illustrates a bottom view of an aircraft monument floor attachment stud, in accordance with one or more embodiments of the disclosure;
FIG. 3D illustrates a left view of an aircraft monument floor attachment stud, in accordance with one or more embodiments of the disclosure;
FIG. 3E illustrates a front view of an aircraft monument floor attachment stud, in accordance with one or more embodiments of the disclosure;
FIG. 3F illustrates a right view of an aircraft monument floor attachment stud, in accordance with one or more embodiments of the disclosure;
FIG. 3G illustrates a rear view of an aircraft monument floor attachment stud, in accordance with one or more embodiments of the disclosure; and
FIG. 3H illustrates a cross-section view of an aircraft monument floor attachment stud, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one," "one or more," or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein.

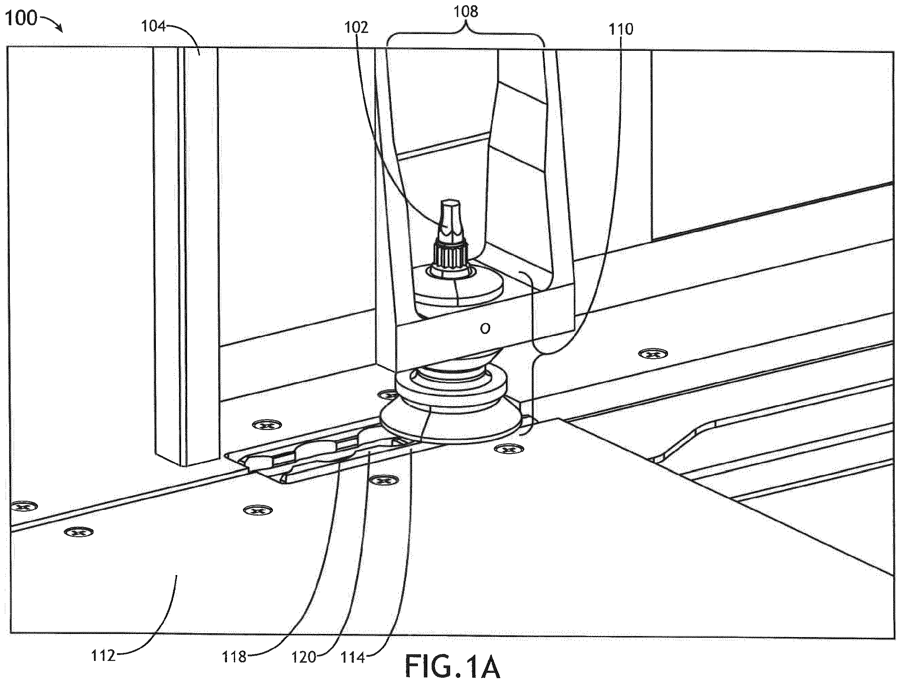

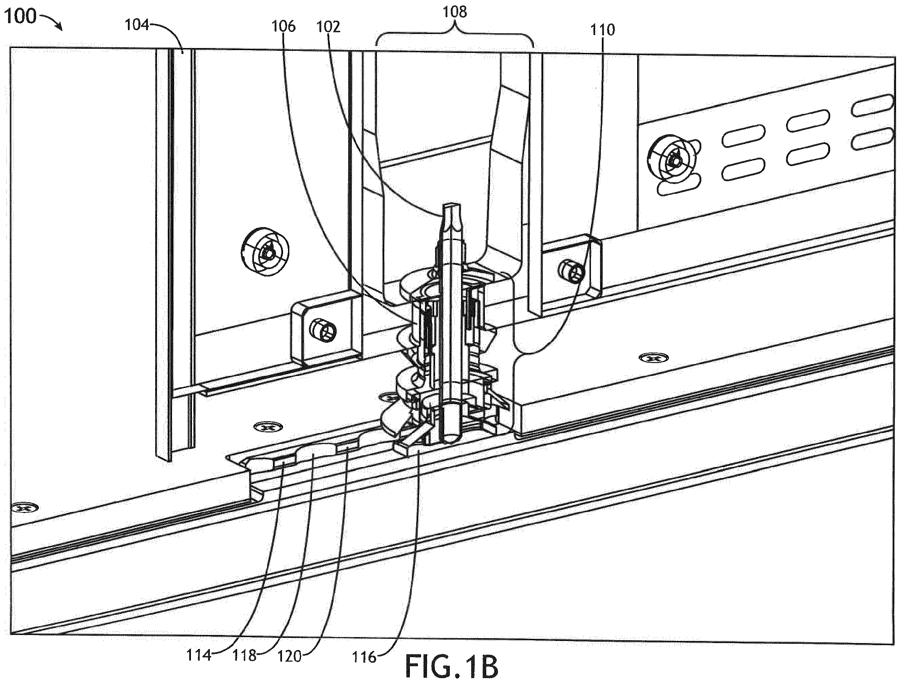

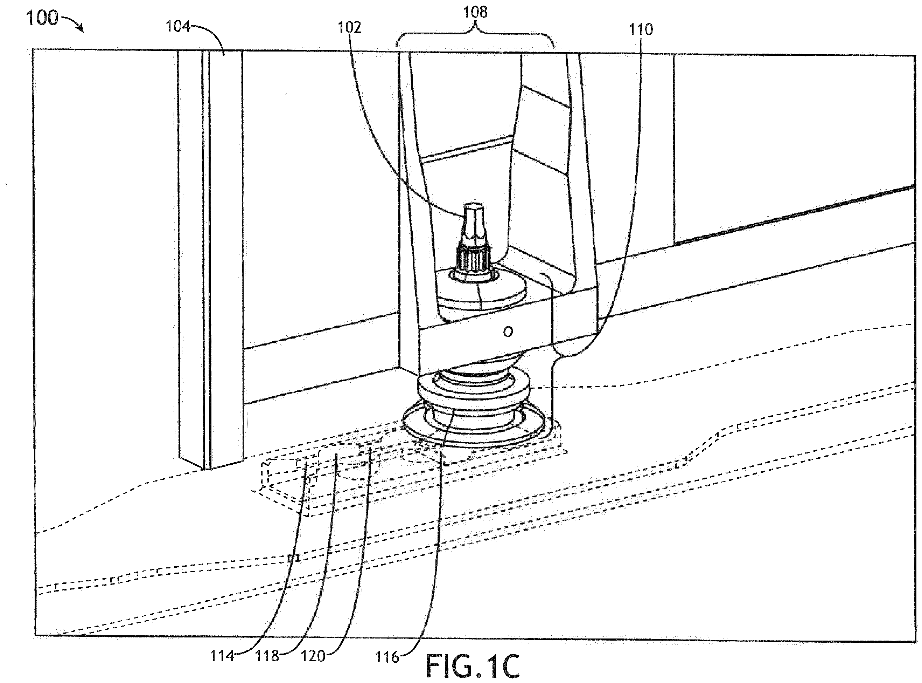

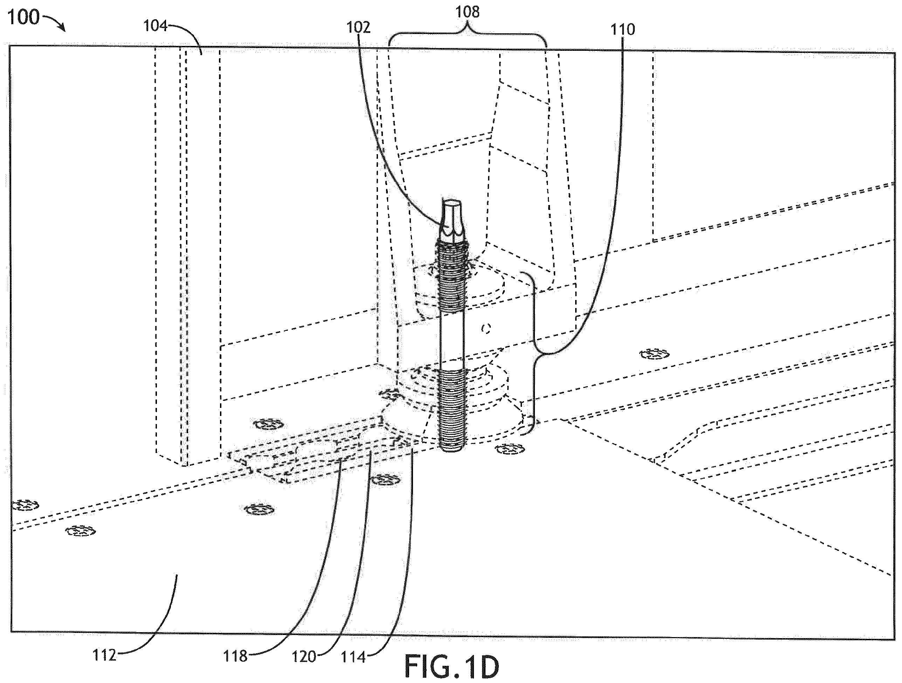

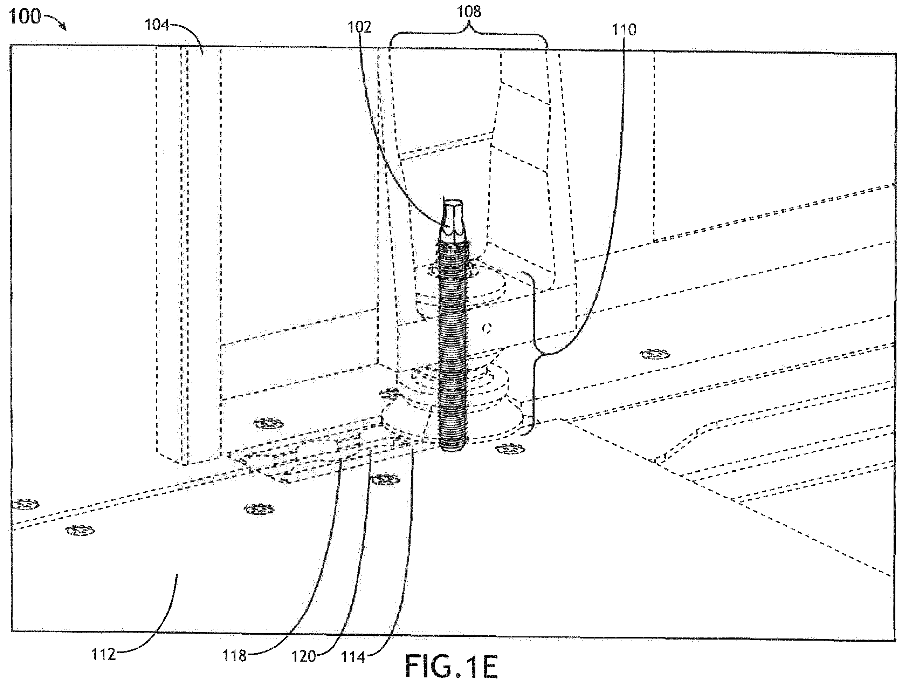

FIGS. 1A-3H generally illustrate an aircraft monument floor attachment stud, in accordance with one or more embodiments of the disclosure.

An aircraft cabin may include one or more aircraft monuments. The aircraft monument may include floor attachment components requiring the use of hand tools during installation of the aircraft monument within the aircraft cabin.

Being installed within an aircraft cabin, the aircraft monument may be required to meet load-bearing/weight-bearing requirements set forth in aviation guidelines and/or standards without losing the intended functionality of the aircraft monument. For example, the aircraft monument may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

One type of floor attachment component includes a floor attachment stud requiring the use of a hex key (e.g., Allen key or Allen wrench) inserted within a hex socket set within the body of the floor attachment stud. Due to the size of the floor attachment stud, a predetermined amount of torque necessary to secure the aircraft monument and allow the aircraft monument meet aviation guidelines and/or standards, when applied with the hex key, may damage the floor attachment stud and/or the hex key.

For example, the hex socket may be stripped, with the internally-set corners being rounded until the hex key no longer engages the hex socket. By way of another example, the floor attachment stud may fail (e.g., crack, shear, or the like) proximate to a section of the wall of the floor attachment stud including the hex socket. By way of another example, the hex key may be stripped, with the externally-set corners being rounded until the hex key no longer engages the hex socket.

As such, it would be beneficial to provide an aircraft monument floor attachment stud that is less prone to failure during installation of the aircraft monument while continuing to allow the aircraft monument to continue to meet aviation guidelines and/or standards. For example, the aircraft monument floor attachment stud may include an improved mechanism in place of the hex socket requiring the use of a hex key, where the improved mechanism is still capable of accepting the amount of torque necessary to secure the aircraft monument and allow the aircraft monument to meet aviation guidelines and/or standards.

FIGS. 1A-3H in general illustrate an aircraft cabin 100 including an aircraft monument floor attachment stud 102, in accordance with one or more embodiments of the disclosure. It is noted herein that the terms "aircraft monument floor attachment stud 102" and variants of the term including, but not limited to, "floor attachment stud 102", "attachment stud 102", "floor stud 102", "stud 102", or the like may be considered equivalent, for purposes of the present disclosure.

Referring now to FIGS. 1A-1E, the aircraft cabin 100 may include one or more aircraft monuments 104. It is noted herein the one or more attachments studs 102 may be considered components of the one or more aircraft monuments 104, or instead components separate from the one or more aircraft monuments 104 (e.g., standalone components configured to interact with the one or more aircraft monuments 104).

The one or more attachment studs 102 may pass through or be inserted into one or more corresponding openings 106 that are defined within an aircraft monument 104 of the one or more aircraft monuments 104. For example, the one or more corresponding openings 106 may be of a limited width and/or height, such that tool access to the one or more attachment studs 102 may be limited to select hand tools.

The one or more attachment studs 102 may be inserted into one or more corresponding openings 108 within the aircraft monument 104. The one or more openings 106, 108 may be within one or more support structures of the aircraft monument 104. For example, the one or more support structures may include, but are not limited to, one or more frames, one or more sub-frames, one or more interior or exterior décor panels, or the like.

The one or more attachment studs 102 may be configured to engage the aircraft monument 104 via one or more fasteners 110. For example, the one or more fasteners 110 may include, but are not limited to, washers, threaded nuts, bushings, spacers, or the like.

The one or more attachment studs 102 may be inserted into the aircraft monument 104 proximate to a floor 112 of the aircraft cabin 100. In one non-limiting example, the one or more fasteners 110 may include, but are not limited to, one or more washers or spacers on a floor 112 side of the one or more openings 106, one or more bushings at least partially positioned within the one or more openings 106, one or more washers or spacers on an opposite side of the one or more openings 106 (e.g., an opening 108 side), and/or one or more threaded nuts on the opposite side of the one or more openings 106.

The floor 112 may include one or more mount points 114. The one or more mount points 114 include one or more tracks, and may include one or more cargo tie-down components (e.g., rings, brackets, or the like) or other installed mount points configured to allow the one or more aircraft monuments 104 to be installed within the aircraft cabin 100.

The one or more tracks 114 may be configured to receive one or more fittings 116. A fitting 116 of the one or more fittings 116 may be configured to insert into a mount point 114 of the one or more mount points 114 at (or in) a first position 118 of the mount point 114 and be configured to lock to the mount point 114 at (or in) a second position 120 of the mount point 114. For example, the fitting 116 may be configured to insert into the mount point 114 at the first position 118 and translate within the mount point 114 until it locks to the mount point 114 at the second position 120. By way of another example, the fitting 116 may be configured to insert into the mount point 114 at the first position 118 and rotate within the mount point 114 until it locks to the mount point 114 in the second position 120. By way of another example, the fitting 116 may be configured to insert into the mount point 114 at the first position 118 and both translate and rotate within the mount point 114 until it locks to the mount point 114 at and in the second position 120. The one or more attachment studs 102 may be configured to couple to the one or more fittings 116.

In one non-limiting example, the aircraft cabin 100 may include one or more tracks 114 and one or more track fittings 116, where the one or more track fittings 116 are configured to insert to the one or more tracks 114 at (or in) the first position 118 and configured to lock to the one or more tracks 114 at (or in) the second position 120.

While embodiments of the present disclosure illustrate the aircraft cabin 100 may include and/or components installed within the aircraft cabin 100 (e.g., the aircraft monument 104, the one or more fasteners 110, the floor 112, the one or more mount points 114, the one or more fittings 116, or other components installed within the aircraft cabin 100) may receive the one or more attachment studs 102, it should be understood that the aircraft cabin 100 and/or the components installed within the aircraft cabin 100 may not form part of the claimed invention or design but rather is only a portion of an environment in which the claimed invention or design operates. Therefore, the above description should not be interpreted as a limitation on the scope of the present disclosure but merely an illustration.

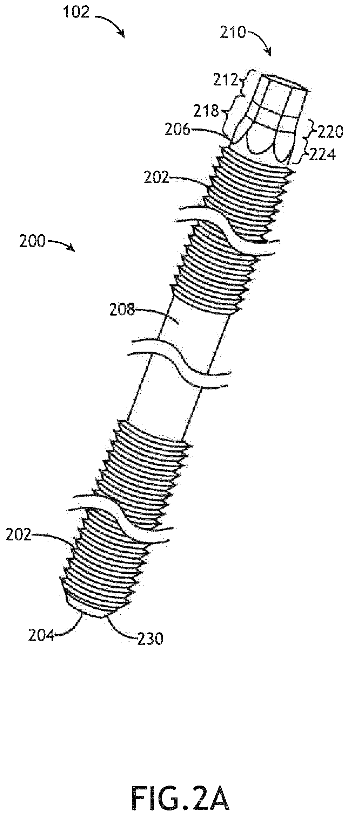

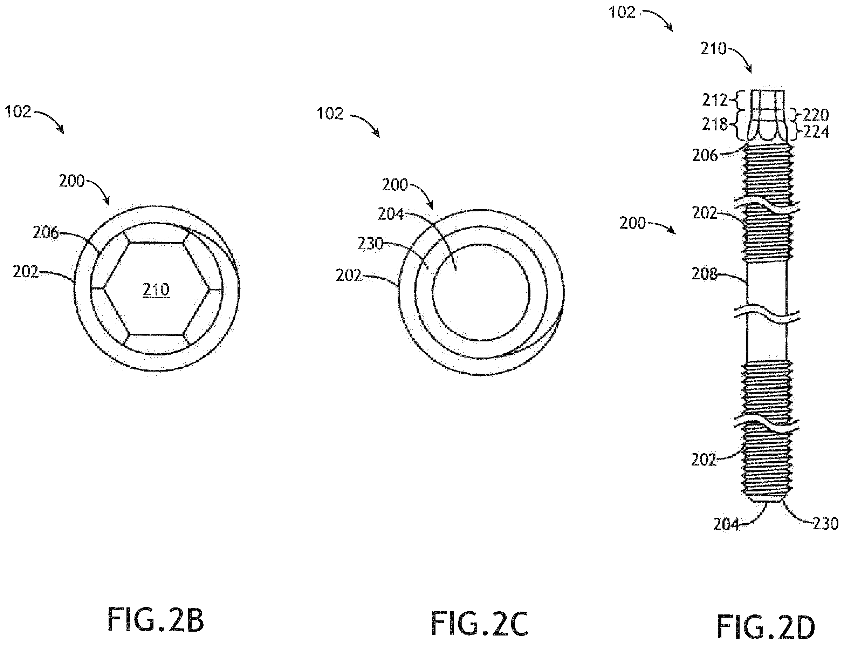

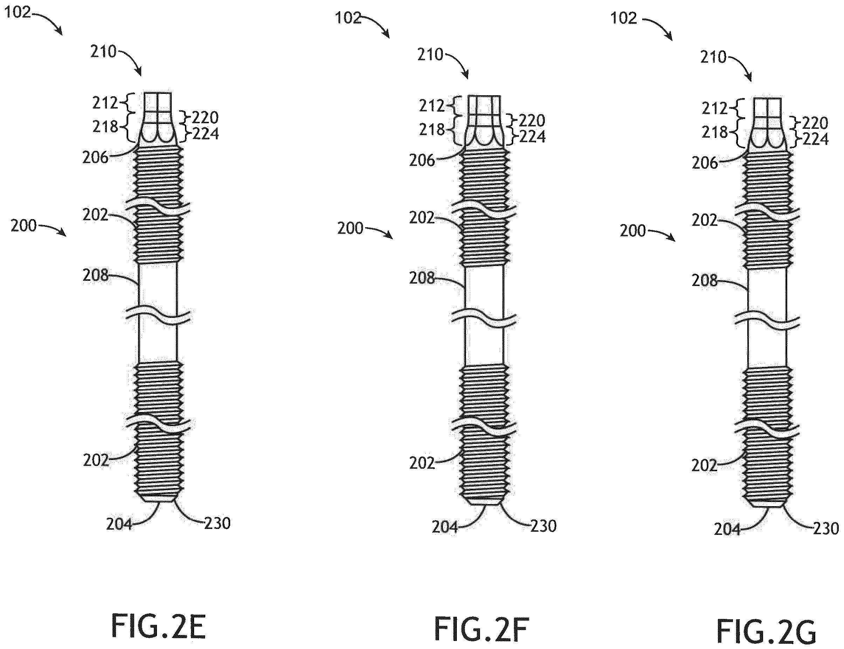

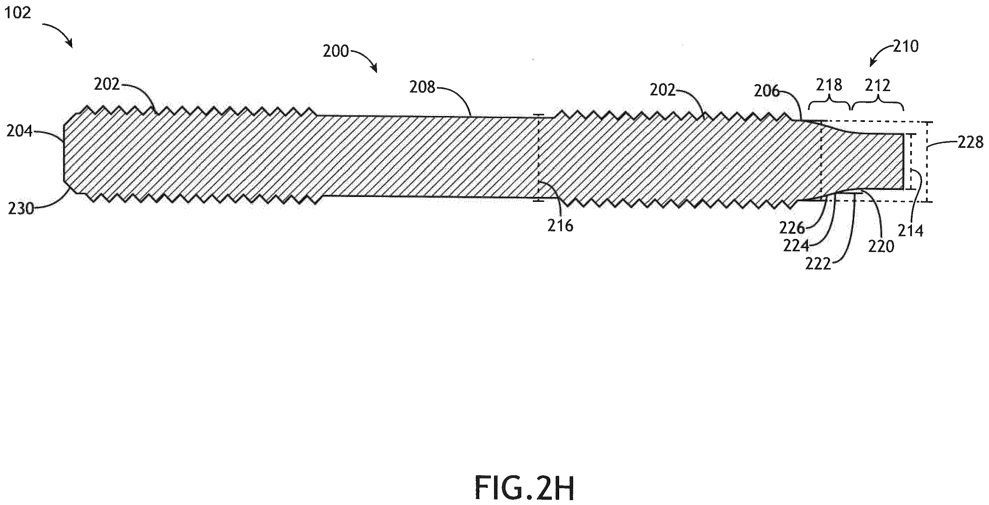

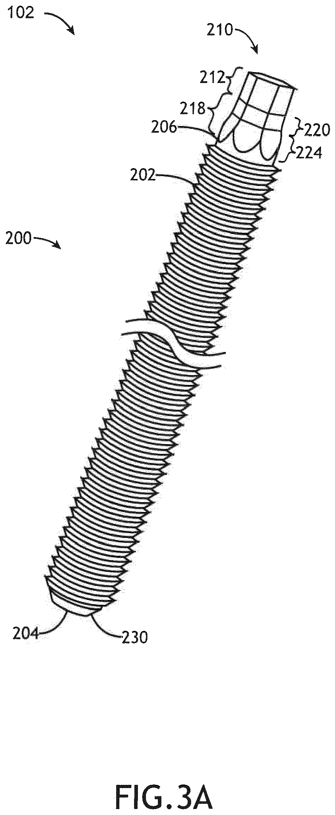

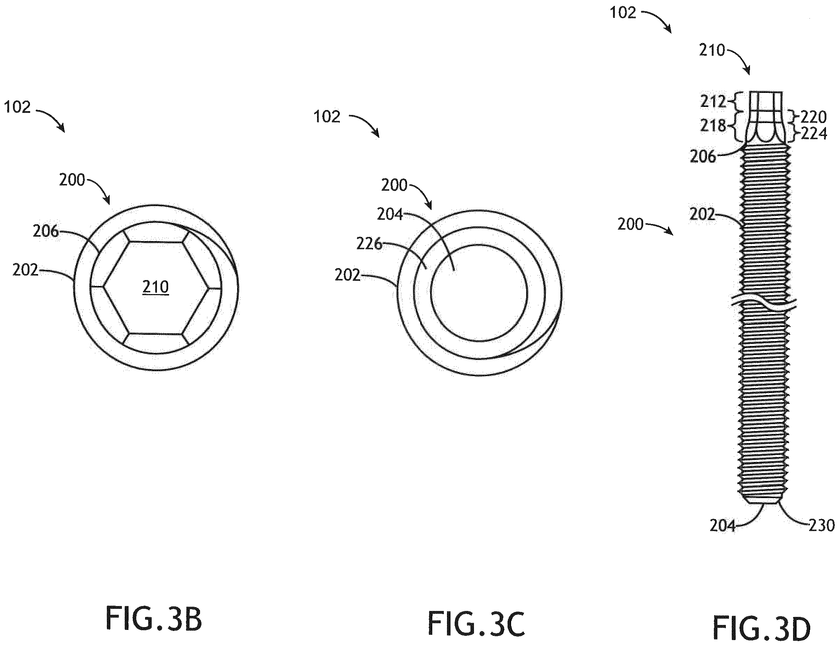

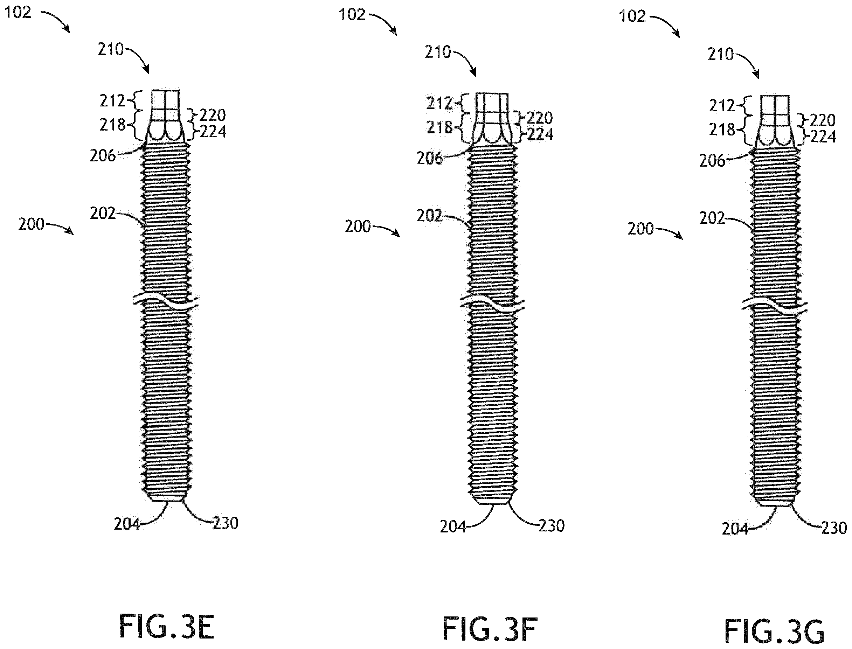

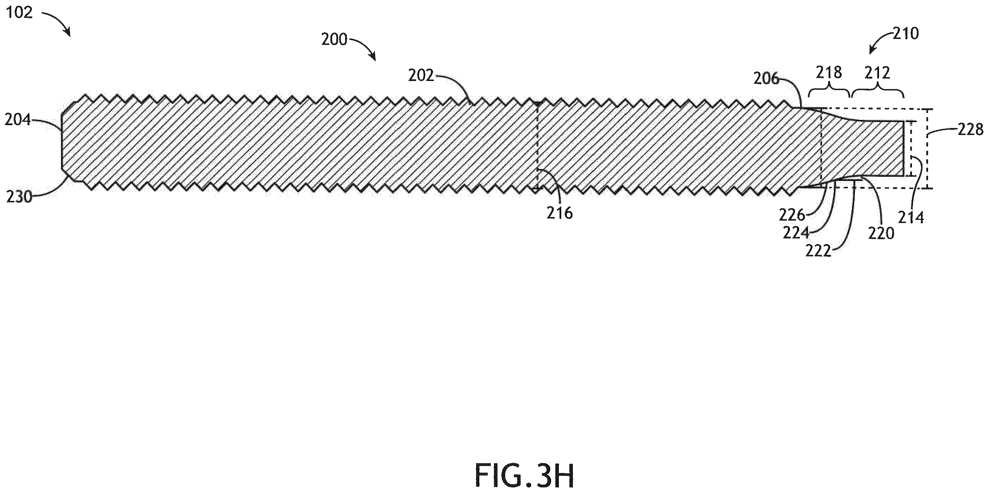

Referring now to FIGS. 2A-2H and 3A-3H, the attachment stud 102 may include a body 200. For example, the body 200 may include an external circular or polygon cross-section with 1, 2, or up to an N number of sides. For instance, the body 200 may include, but is not limited to, a circular cross-section, a star-shaped cross section, a hexagonal cross-section, or the like.

The body 200 may include one or more interlocking assemblies along a length of the body 200. The one or more interlocking assemblies may include threaded sections at one or more points along a length of the body 200. For example, the body 200 may include a first threaded section 202 along a first portion of the length of the body and proximate to a first end 204 of the body 200. By way of another example, the body 200 may include a second threaded section 202 along a second portion of the length of the body and proximate to a second end 206 of the body 200. For instance, the first threaded section 202 may be configured to couple to a corresponding threaded section within a fitting 116 of the one or more fittings 116, and the second threaded section 202 may be configured to couple to a fastener 110, where the opening 108 of the aircraft monument 102 is contained between the fastener 110 and the fitting 116. By way of another example, the body 200 may include a single threaded section 202. For instance, the threaded section 202 may be configured to couple to a corresponding threaded section within a fitting 116 of the one or more fittings 116 and may be configured to couple to a fastener 110, where the opening 108 of the aircraft monument 102 is contained between the fastener 110 and the fitting 116.

For example, as illustrated in FIGS. 2A-2H, the body 200 may include one or more non-threaded sections 208 (e.g., smooth sections, or the like) at one or more points along the length of the body 200. For instance, the body 200 may include one or more non-threaded sections 208 positioned between the first threaded section 202 and the second threaded section 202. By way of another example, as illustrated in FIGS. 3A-3H, the body 200 may not include a non-threaded section 208, and the entire body 102 may instead include a single threaded section 202.

Although embodiments of the disclosure illustrate the body 200 including threaded sections 202, it is noted that in examples not claimed the body 200 is not limited to threading but instead may include alternative interlocking assemblies (e.g., taband-groove assemblies, or the like). For example, the body 200 and a fitting 116 may include components of a shared interlocking assembly. By way of another example, the body 200 and a fastener 110 may include components of a shared interlocking assembly. Therefore, the above description should not be interpreted as a limitation on the present disclosure but merely an illustration.

The attachment stud 102 may include a head 210. The head 210 may be integrated with or coupled to the body 200 at the second end 206 of the body 200. Where the body 200 include the second threaded section 202 along the second portion of the length of the body, the second threaded section 202 may be proximate to the head 210.

The head 210 may include a tool section 212. The tool section 212 may include a hexagonal cross-section.

The tool section 212 may be configured to receive a tool, the tool capable of being inserted into an opening 106 including the attachment stud 102. The tool may be capable of providing a predetermined amount of torque necessary to secure the aircraft monument 104 including the attachment stud 102 and allow the aircraft monument 104 to meet aviation guidelines and/or standards. For example, the tool section 212 may be configured to engage with a wrench (or spanner) including, but not limited to, an open-end wrench, a combination open-end and box-end wrench, a box-end wrench, an adjustable or crescent wrench, or other wrench configured to provide a predetermined amount of torque necessary to secure the aircraft monument 104 including the attachment stud 102 and allow the aircraft monument 104 to meet aviation guidelines and/or standards. By way of another example, the tool section 212 may be configured to engage with a socket (e.g., a component of a ratchet or socket wrench) configured to provide a predetermined amount of torque necessary to secure the aircraft monument 104 including the attachment stud 102 and allow the aircraft monument 104 to meet aviation guidelines and/or standards.

In this regard, the tool section 212 being raised above the body 200 may allow for an increased possible number of usable tools to provide torque to the attachment stud 102 (e.g., as opposed to an attachment stud with a hex socket set within the body).

The tool section 212 may include one or more tool section diameters 214 (e.g., a single tool section diameter 214 where the tool section 212 cross-section is circular, or multiple tool section diameters 214 where the tool section 212 cross-section is non-circular). The body 200 may include one or more body diameters 216 (e.g., a major or minor diameter of the threaded section 202, a diameter of the non-threaded section 208, or the like).

At least one tool section diameter 214 of the one or more tool section diameters 214 may be less than at least one body diameter 216 of the one or more body diameters 216 of the body 200. To account for the difference in the tool section diameter 214 versus the body diameter 216, the head 210 may include a shaped section 218. In general, the shaped section 218 may include one or more shaped portions. The one or more shaped portions may include one or more sloped surfaces configured to provide a transition between the tool section diameter 214 of the tool section 212 and the body diameter 216 of the body 200.

For example, the shaped section 218 may include a first shaped portion 220 with a first sloped surface 222 proximate to the tool section 212 and a second shaped portion 224 with a second sloped surface 226 proximate to the body 200. For instance, the first sloped surface 222 may transition the head 210 from the tool section diameter 214 of the tool section 212 to an intermediate diameter 228. In addition, the second sloped surface 226 may transition the head 210 from the intermediate diameter 228 to the body diameter 216 of the body 200. In this regard, one intermediate diameter 228 may be considered at an intersection or a transition point between the first sloped surface 222 and the second sloped surface 226.

Where the shaped section 218 includes multiple shaped portions, the multiple shaped portions may include surfaces with different slopes. For example, the first sloped surface 222 may be set at a shallower angle relative to a central axis through a length of the body 200 as compared to an angle relative to the central axis through the length of the body 200 at which the second sloped surface 226 may be set. It is noted herein, however, the multiple shaped portions may include surfaces with the same slope.

A transition point between the head 210 and the body 200 (e.g., at the end 206 of the body 200) may include be of a non-uniform height with respect to the end 204 (e.g., may trace a wavy line, scalloped line, undulating line, or the like). The uneven interface may reduce or prevent the possibility of the attachment stud 102 failing at the head 210. It is noted herein, however, that the interface between the head 210 and the body 200 may be of a uniform height with respect to the end 204. Therefore, the above description should not be interpreted as a limitation on the present disclosure but merely an illustration.

In this regard, the shaped section 218 may be configured to improve torque transfer via the tool section 212 of the head 210 to the body 200 from the tool. The improved torque transfer may reduce or prevent the possibility of the attachment stud 102 failing at the head 210 (e.g., as opposed to an attachment stud with a hex socket set within the body).

Although embodiments of the present disclosure illustrate the shaped section 218 including straight-line portions, it is noted herein the shaped section 218 may include one or more convex or concave-line portions to further reduce or prevent the possibility of a corner within the head 210 that may result in an increased chance of failure of the attachment stud 102 when torque is transferred via the tool section 212 of the head 210 to the body 200 from the tool.

The end 204 of the body 200 may include an edge-forming surface 230. For example, the edge-forming surface 230 may include a chamfer, fillet, bevel, or other edge-forming surface. The edge-forming surface 230 may reduce or prevent the possibility of failure (e.g., when the attachment stud 102 is inserted into a particular opening 106 and/or a particular opening 108, when the attachment stud 102 engages a fitting 116, or the like). In this regard, the body 200 may include multiple body diameters 216 (e.g., one or more main body diameters 216 and a reduced body diameter 216 at the end 204 of the body 200).

The attachment stud 102 may be fabricated through any manufacturing process known in the art. The body 200 and/or the head 210 may be machined in a fully heat-treated condition. Sharp edges may be deburred. The threaded section 202 may be formed through one or more rolling processes. For example, the threaded section 202 may be formed through a single continuous process. For instance, the threaded section 202 may be a right-hand threading. By way of another example, the threaded section 202 may be formed after the heat treatment and machining of the body 200 and/or the head 210. By way of another example, a threaded section 202 runout may include a progressive and regular junction avoiding sharp changes. For instance, a threaded section 202 lead and/or the threaded section 202 runout may be configured to meet guidelines and/or standards as set forth in Clause 4 of International Organization for Standardization (ISO) 3353 1:2002.

The attachment stud 102 may be fabricated to one or more specifications. In one or more non-limiting examples, the specifications may include, but are not limited to, a 15 depth x 5/16-inch (") 24 UNJF-3A thread, a 23 depth x 5/16" - 24 UNJF-3A thread, or a 1.2 x 45° chamfer.

The attachment stud 102 may be fabricated to meet one or more tolerances. In one or more non-limiting examples, the tolerances may include, but are not limited to, at least one of linear dimensions ranging between +/- 0.05 millimeter (mm), angular dimensions ranging between +/- 0.5 degrees (°), drilled holes ranging from +/- 0.2 mm, a corner radius ranging between +/- 0.5 mm, a surface finish ranging from +/- 0.8 micrometer (µm), a flatness of 0.5 mm per 500 mm, or an internal bend radius ranging between +/- 0.5 mm.

It is noted herein the one or more fabrication processes, the one or more specifications, and/or the one or more tolerances as provided in the above description should not be interpreted as a limitation on the present disclosure but merely an illustration.

In this regard, the aircraft monument floor attachment stud 102 is less prone to failure during installation of the aircraft monument 104 while continuing to allow the aircraft monument 104 to continue to meet aviation guidelines and/or standards. For example, the aircraft monument floor attachment stud 102 may include the tool section 212 of the head 210, where the tool section 212 of the head 210 is capable of accepting the amount of torque necessary to secure the aircraft monument 104 and allow the aircraft monument 104 to meet aviation guidelines and/or standards.

Although embodiments of the disclosure are directed to an aviation environment such as an aircraft cabin 100, it is noted herein the aircraft monument floor attachment stud 102 is not limited to the aviation environment and/or the aircraft components within the aviation environment. For example, the aircraft monument floor attachment stud 102 may be configured for any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. By way of another example, the aircraft monument floor attachment stud 102 may be configured for commercial or industrial use in either a home or a business. Therefore, the above description should not be interpreted as a limitation on the present disclosure but merely an illustration.

Although the disclosure has been described with reference to the embodiments illustrated in the attached drawing figures, substitutions may be made insofar as they do not depart from the scope of the claims. Components illustrated and described herein are merely examples of a system/device and components that may be used to implement embodiments of the disclosure and may be replaced with other devices and components insofar as this does not depart from the scope of the claims. Furthermore, any dimensions, degrees, and/or numerical ranges provided herein are to be understood as non-limiting examples unless otherwise specified in the claims.

## Claims

1. An aircraft cabin (100) comprising:
a floor (112) including a track (114),
an aircraft monument (104) including an opening (106) defined within a support structure of the aircraft monument;
a fitting (116) inserted within and locked to the track;
one or more fasteners (110) including a threaded nut;
a floor attachment stud (102) engaged to the aircraft monument by the one or more fasteners and coupled to the fitting, comprising:
a body (200) disposed within the opening of the aircraft monument and including a first threaded section (202) and a second threaded section (202) each including at least one body diameter, the first threaded section disposed at a first end of the body by which the body is coupled to the fitting (116), the second threaded section disposed at a second end of the body by which the body is coupled to the threaded nut; and
a head (210) integrated with the body at the second end, the head comprising:
a tool section (212) including an external hexagonal cross-section and at least one tool section diameter (214), the at least one section diameter being less than the at least one body diameter, the tool section being configured to receive a predetermined amount of torque from a tool by the external hexagonal cross-section to secure the aircraft monument to the fitting; and
a shaped section (218) including at least one intermediate diameter (228), the shaped section including at least one shaped portion with at least one sloped wall, the shaped section being configured to provide a transition between the at least one tool section diameter of the tool section and the at least one body diameter of the body, the at least one intermediate diameter being greater than the at least one tool section diameter, the at least one intermediate diameter being less than the at least one body diameter;
wherein the fitting is positioned on a floor side of the opening and the threaded nut is positioned on an opposite side of the opening.

2. The aircraft cabin of Claim 1, the first threaded section and the second threaded section being separated by at least one non-threaded section (208).

3. The aircraft cabin of Claim 1, a transition point between the head and the body being of a non-uniform height with respect to the second end of the body.

4. The aircraft cabin of Claim 1, the the first threaded section and the second threaded section forming a single threaded section being configured to couple to the fitting and to the threaded nut.

5. The aircraft cabin of any preceding Claim, the at least one shaped portion with the at least one sloped wall including a first shaped portion with a first sloped surface proximate to the tool section and a second shaped portion with a second sloped surface proximate to the body.

6. The aircraft cabin of Claim 5, the at least one intermediate diameter being at a transition point between the first sloped surface and the second sloped surface.

7. The aircraft cabin of Claim 5, the first sloped surface being set at a first angle relative to a central axis through a length of the body that is shallower than a second angle relative to the central axis through the length of the body at which the second sloped surface is set.

## Patentansprüche

1. Flugzeugkabine (100), umfassend:
einen Boden (112), der eine Schiene (114) beinhaltet,
ein Flugzeugmodul (104), das eine innerhalb einer Tragkonstruktion des Flugzeugmoduls definierte Öffnung (106) beinhaltet;
ein Beschlag (116), der in die Schiene eingesetzt und an dieser gesichert ist;
ein oder mehrere Befestigungselemente (110), die eine Gewindemutter beinhalten;
einen Bodenbefestigungsbolzen (102), der durch die eine oder mehreren Befestigungselemente mit dem Flugzeugmodul in Eingriff und an den Beschlag gekoppelt ist, umfassend:
einen Körper (200), der innerhalb der Öffnung des Flugzeugmoduls angeordnet ist und einen ersten Gewindeabschnitt (202) und einen zweiten Gewindeabschnitt (202) beinhaltet, die jeweils mindestens einen Körperdurchmesser beinhalten, wobei der erste Gewindeabschnitt an einem ersten Ende des Körpers angeordnet ist, durch das der Körper an den Beschlag (116) gekoppelt ist,
und der zweite Gewindeabschnitt an einem zweiten Ende des Körpers angeordnet ist, durch das der Körper an die Gewindemutter gekoppelt ist; und
einen Kopf (210), der an dem zweiten Ende einstückig mit dem Körper ausgebildet ist, wobei der Kopf Folgendes umfasst:
einen Werkzeugabschnitt (212), der einen äußeren sechseckigen Querschnitt und mindestens einen Werkzeugabschnittsdurchmesser (214) beinhaltet, wobei der mindestens eine Abschnittsdurchmesser kleiner ist als der mindestens eine Körperdurchmesser und der Werkzeugabschnitt zum Aufnehmen eines vorbestimmten Drehmomentbetrags von einem Werkzeug durch den äußeren sechseckigen Querschnitt konfiguriert ist, um das Flugzeugmodul an dem Beschlag zu sichern; und
einen geformten Abschnitt (218), der mindestens einen Zwischendurchmesser (228) beinhaltet, wobei der geformte Abschnitt mindestens einen geformten Teil mit mindestens einer geneigten Wand beinhaltet, wobei der geformte Abschnitt zum Bereitstellen eines Übergangs zwischen dem mindestens einen Werkzeugabschnittsdurchmesser des Werkzeugabschnitts und dem mindestens einen Körperdurchmesser des Körpers konfiguriert ist,
wobei der mindestens eine Zwischendurchmesser größer ist als der mindestens eine Werkzeugabschnittsdurchmesser, wobei der mindestens eine Zwischendurchmesser kleiner ist als der mindestens eine Körperdurchmesser;
wobei der Beschlag auf einer Bodenseite der Öffnung positioniert ist und die Gewindemutter auf einer gegenüberliegenden Seite der Öffnung positioniert ist.

2. Flugzeugkabine nach Anspruch 1, wobei der erste Gewindeabschnitt und der zweite Gewindeabschnitt durch mindestens einen gewindelosen Abschnitt (208) getrennt sind.

3. Flugzeugkabine nach Anspruch 1, wobei ein Übergangspunkt zwischen dem Kopf und dem Körper in Bezug auf das zweite Ende des Körpers eine nicht einheitliche Höhe aufweist.

4. Flugzeugkabine nach Anspruch 1, wobei der erste Gewindeabschnitt und der zweite Gewindeabschnitt einen einzigen Gewindeabschnitt bilden, der zum Koppeln an den Beschlag und an die Gewindemutter konfiguriert ist.

5. Flugzeugkabine nach einem der vorhergehenden Ansprüche, wobei der mindestens eine geformte Teil mit der mindestens einen geneigten Wand einen ersten geformten Abschnitt mit einer ersten geneigten Fläche in der Nähe des Werkzeugabschnitts und einen zweiten geformten Abschnitt mit einer zweiten geneigten Fläche in der Nähe des Körpers beinhaltet.

6. Flugzeugkabine nach Anspruch 5, wobei sich der mindestens eine Zwischendurchmesser an einem Übergangspunkt zwischen der ersten geneigten Fläche und der zweiten geneigten Fläche befindet.

7. Flugzeugkabine nach Anspruch 5, wobei die erste geneigte Fläche in einem ersten Winkel relativ zu einer Mittelachse durch eine Länge des Körpers angeordnet ist, der flacher ist als ein zweiter Winkel relativ zu der Mittelachse durch die Länge des Körpers, in dem die zweite geneigte Fläche angeordnet ist.

## Revendications

1. Cabine d'aéronef (100), comprenant :
un plancher (112) comportant un rail (114),
un monument d'aéronef (104) comportant une ouverture (106) définie à l'intérieur d'une structure de support de monument d'aéronef ;
un raccord (116) inséré à l'intérieur et verrouillé sur le rail ;
un ou plusieurs éléments de fixation (110) comportant un écrou fileté ;
un goujon de fixation au sol (102) en prise avec le monument d'aéronef par les un ou plusieurs éléments de fixation et couplé au raccord,
comprenant :
un corps (200) disposé à l'intérieur de l'ouverture du monument d'aéronef et comportant une première section filetée (202) et une seconde section filetée (202) comportant chacune au moins un diamètre de corps, la première section filetée étant disposée à une première extrémité du corps par laquelle le corps est couplé au raccord (116), la seconde section filetée étant disposée à une seconde extrémité du corps par laquelle le corps est couplé à l'écrou fileté ; et
une tête (210) intégrée au corps à la seconde extrémité, la tête comprenant :
une section d'outil (212) comportant une section transversale hexagonale externe et au moins un diamètre de section d'outil (214), l'au moins un diamètre de section étant inférieur à l'au moins un diamètre de corps, la section d'outil étant configurée pour recevoir une quantité prédéterminée de couple d'un outil par la section transversale hexagonale externe pour fixer le monument d'aéronef au raccord ; et
une section profilée (218) comportant au moins un diamètre intermédiaire (228), la section profilée comportant au moins une partie profilée avec au moins une paroi inclinée, la section profilée étant configurée pour fournir une transition entre l'au moins un diamètre de section d'outil de la section d'outil et l'au moins un diamètre de corps du corps, l'au moins un diamètre intermédiaire étant supérieur à l'au moins un diamètre de section d'outil, l'au moins un diamètre intermédiaire étant inférieur à l'au moins un diamètre de corps ;
dans laquelle le raccord est positionné sur un côté sol de l'ouverture et l'écrou fileté est positionné sur un côté opposé de l'ouverture.

2. Cabine d'aéronef selon la revendication 1, la première section filetée et la seconde section filetée étant séparées par au moins une section non filetée (208).

3. Cabine d'aéronef selon la revendication 1, un point de transition entre la tête et le corps étant d'une hauteur non uniforme par rapport à la seconde extrémité du corps.

4. Cabine d'aéronef selon la revendication 1, la première section filetée et la seconde section filetée formant une seule section filetée étant configurée pour s'accoupler au raccord et à l'écrou fileté.

5. Cabine d'aéronef selon une quelconque revendication précédente, l'au moins une partie profilée avec l'au moins une paroi inclinée comportant une première partie profilée avec une première surface inclinée à proximité de la section d'outil et une seconde partie profilée avec une seconde surface inclinée à proximité du corps.

6. Cabine d'aéronef selon la revendication 5, l'au moins un diamètre intermédiaire étant à un point de transition entre la première surface inclinée et la seconde surface inclinée.

7. Cabine d'aéronef selon la revendication 5, la première surface inclinée étant définie à un premier angle par rapport à un axe central à travers une longueur du corps qui est moins profond qu'un second angle par rapport à l'axe central à travers la longueur du corps auquel la seconde surface inclinée est définie.
